# EUROPÄISCHE PATENTSCHRIFT

(11) **EP 3 090 857 B1**
(45) Veröffentlichungstag und Bekanntmachung des Hinweises auf die Patenterteilung: **22.07.2020**
(21) Anmeldenummer: 16166597.1
(22) Anmeldetag: 22.04.2016
(51) Int. Cl.: B29C 63/04

(54) **BESCHICHTUNGSMATERIAL ZUR BESCHICHTUNG UNSTETER OBERFLÄCHEN SOWIE VERFAHREN**
COATING MATERIAL FOR COATING UNEVEN SURFACES AND METHOD
MATERIAU DE REVETEMENT DESTINE A REVETIR DES SURFACES IRREGULIERES

(30) Priorität: 04.05.2015 DE 102015208172
(43) Veröffentlichungstag der Anmeldung: 09.11.2016
(73) Patentinhaber: HOMAG GmbH, 72296 Schopfloch (DE)
(72) Erfinder: Schmid, Johannes, 72181 Starzach (DE); Götz, Reiner, 72160 Horb-Diessen (DE)
(74) Vertreter: Hoffmann Eitle

(56) Entgegenhaltungen:
- EP-A1- 2 239 115
- EP-A2- 1 479 494
- DE-C1- 19 947 164
- IT-A1- TV20 130 087

## Beschreibung

### Technisches Gebiet

Die vorliegende Erfindung betrifft ein Beschichtungsmaterial, insbesondere ein Schmalflächenbeschichtungsmaterial, zur Beschichtung unsteter Oberflächen, wie beispielsweise einem Türfalz, sowie ein Verfahren zur Beschichtung solcher Oberflächen. Derartige Beschichtungsmaterialien werden beispielsweise im Bereich der Möbel- bzw. Bauelementeindustrie eingesetzt.

### Stand der Technik

Im Stand der Technik ist es bekannt, ein streifen- oder bandförmiges Beschichtungsmaterial mit einem Haftmittel zu versehen und bspw. an einer Schmalseite eines Werkstücks aufzubringen. Falls die zu beschichtende Oberfläche unstet ausgebildet ist, also rein beispielhaft Kanten oder Ecken umfasst, kann ein relativ dünnes Beschichtungsmaterial verwendet werden, um dieses an die vorgegebene Oberfläche anzupressen und somit um eine Kante oder Ecke zu biegen.

Allerdings haben derart dünne Beschichtungsmaterialen den Nachteil, dass diese gerade im Bereich der Kanten aufgrund der genannten Bearbeitung vergleichsweise stoßempfindlich sind.

Ferner verbleiben bei den genannten Beschichtungsmaterialien, die kurz vor der Aufbringung an einem Werkstück mit einem Haftmittel versehen werden, Haftmittelreste und eine Fuge zwischen dem eigentlichen Beschichtungsmaterial und dem zu beschichtenden Werkstück ist sichtbar.

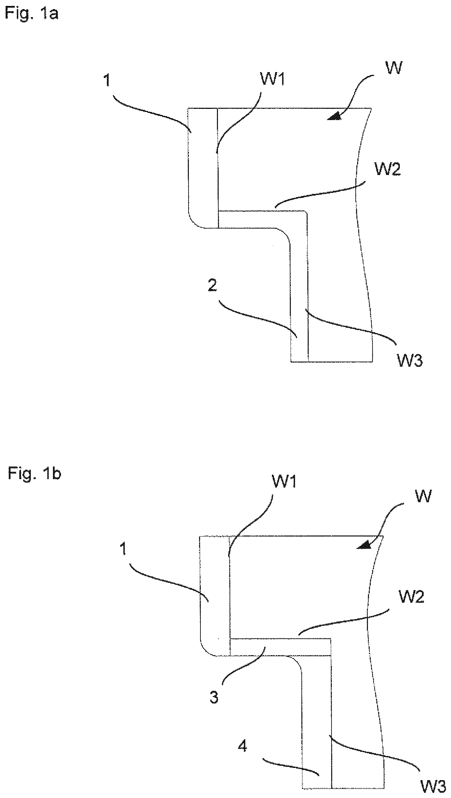

Bei der Beschichtung von vergleichsweise komplizierten Geometrien sind ferner die in Fig. 1a und 1b dargestellten Varianten möglich. In Fig. 1a wird eine erste Werkstückseite W1 eines Werkstücks W mit einem ersten Beschichtungsmaterial 1 versehen, welches Beschichtungsmaterial 1 über die zu einer zweiten Werkstückseite W2 vorliegende und zu beschichtende Kante hervorsteht. Die zweite Werkstückseite W2 und eine gegenüber der zweiten Werkstückseite W2 rechtwinklig angeordnete Werkstückseite W3 des Werkstücks W wird mit einem zweiten Beschichtungsmaterial 2 beschichtet, welches abschnittsweise durch den überlappenden Bereich des ersten Beschichtungsmaterials 1 verdeckt wird.

In Fig. 1b wird eine sogenannte 3-Streifentechnik dargestellt, bei der insgesamt drei Beschichtungsmaterialien verwendet werden. Insbesondere werden die parallelen Seiten des Werkstücks W mit Beschichtungsmaterialien 1, 4 versehen, während die senkrecht hierzu angeordnete zweite Werkstückseite W2 mit einem weiteren Beschichtungsmaterial 3 versehen ist, welches abschnittsweise vom Beschichtungsmaterial 1 und vom Beschichtungsmaterial 4 verdeckt wird.

Ferner ist die EP 2 239 115 A1 bekannt, die ein Verfahren zum Anbringen eines Kantenbandes an eine Kante eines Werkstücks beschreibt, wobei das Kantenband entlang einer ersten Kante des Werkstücks und anschließend an einer zweiten, an die erste Kante angrenzende Kante des Werkstücks angebracht wird. Die erste Kante und die zweite Kante bilden eine Innenecke. Es wird ein Andruckwerkzeug mit mindestens einer ersten und einer zweiten Andruckfläche verwendet, wobei das Kantenband vor dem Eintreffen des Andruckwerkzeugs an der Innenecke an derjenigen Position mit einer Knuickstelle versehen wird, an welcher das Kantenband zur Anlage an der Innenecke des Werkstücks vorgesehen ist.

Im Dokument EP 1 479 494 A2 wird ein Kantenanleimaggregat beschrieben. Da das Kantenanleimaggregat eine Nutsäge aufweist, kann ein Kantenmaterial über enge Biegungen oder Eckkanten hinweg sauber aufgetragen und verklebt werden.

### Gegenstand der Erfindung

Ziel der vorliegenden Erfindung ist es, ein Beschichtungsmaterial zur Beschichtung unsteter Oberflächen sowie ein Beschichtungsverfahren bereitzustellen, um Werkstücke mit unsteten Oberflächen auf effiziente Weise und qualitativ hochwertig beschichten zu können.

Erfindungsgemäß wird ein Beschichtungsmaterial bereitgestellt, welches Beschichtungsmaterial, insbesondere Schmalflächenbeschichtungsmaterial, zur Beschichtung einer unsteten Oberfläche eines Werkstücks, wie beispielsweise einem Türfalz, insbesondere winklig zueinander angeordneten Werkstückseiten, vorgesehen ist. Das Beschichtungsmaterial umfasst eine Trägerschicht sowie eine aktivierbare oder reaktivierbare Haftschicht. Ferner weist das Beschichtungsmaterial zumindest einen Schwächungsbereich auf. Der Schwächungsbereich ist ausgehend von der Haftschicht in das Beschichtungsmaterial eingebracht. Beispielsweise kann es sich um ein streifen- oder bandförmiges Beschichtungsmaterial handeln, welches an einer Schmalseite oder einer Breitseite eines bevorzugt plattenförmigen Werkstücks angebracht werden kann.

Eine unstete Oberfläche im Sinne der vorliegenden Erfindung bezieht sich bspw. aus verschiedenen Werkstückseiten zusammengesetzte Oberfläche, welche Werkstückseiten insbesondere winklig und/oder über einen oder mehrere Radien ineinander übergehen. Beispiele unsteter Oberflächen sind eine Ecke oder eine Kante an einem insbesondere plattenförmigen Werkstück. Insbesondere kann eine Schmalseite eine Ecke und/oder Kante aufweisen. Derartige Oberflächen treten beispielsweise im Bereich eines Türfalzes auf.

Der Schwächungsbereich ermöglicht es, dass das Beschichtungsmaterial leichter an unsteten Oberflächen eines Werkstücks, wie Ecken und Kanten, geführt und angebracht werden kann. Ein Brechen des Beschichtungsmaterials wird in diesen Bereichen somit verhindert und die Qualität der Beschichtung verbessert. Ferner können vergleichsweise dicke Beschichtungsmaterialien eingesetzt werden. Auf diese Weise kann die Wertigkeit des beschichteten Bauteils erhöht werden.

In einer Ausführungsform ist das Beschichtungsmaterial ein koextrudiertes Beschichtungsmaterial, wobei insbesondere die Trägerschicht und die Haftschicht koextrudiert sind, oder die Trägerschicht des Beschichtungsmaterials mit einer Haftschicht versehen wird.

Bevorzugt weist das Beschichtungsmaterial eine Dicke von mindestens 0,5mm - 4 mm, bevorzugt 0,7 - 4mm, weiter bevorzugt 1,5mm - 4mm, auf, wobei die Haftschicht insbesondere eine Dicke von 0,1 - 0,3mm umfasst. Auf Grund des Schwächungsbereichs können somit auch Beschichtungsmaterialien mit vergleichsweise großer Dicke eingesetzt werden.

In einer bevorzugten Ausführungsform ist der Schwächungsbereich eine Aussparung, die im Querschnitt des Beschichtungsmaterials betrachtet insbesondere v-förmig, w-förmig, rechtwinklig oder halbkreisförmig ausgeformt ist, und/oder der Schwächungsbereich ist durch eine Vielzahl von Schlitzen oder Sacklöchern im Beschichtungsmaterial ausgebildet. Auf diese Weise kann die Dicke des Beschichtungsmaterials abschnittsweise reduziert und somit in diesem Bereich die Biegsamkeit des Beschichtungsmaterials erhöht werden.

Alternativ oder gleichzeitig ist der Schwächungsbereich als poröser Bereich der Trägerschicht des Beschichtungsmaterials ausgebildet, um die Biegsamkeit des Beschichtungsmaterials entsprechend abschnittsweise zu erhöhen. Insbesondere kann es sich um eine Mikroporosierung der Trägerschicht handeln.

In weiteren Ausführungsformen ist die Trägerschicht des Beschichtungsmaterials zumindest abschnittsweise aus PVC, Polystyrol, insbesondere aus ABS, aus PP, PE, Polycarbonat und/oder Polymethylmetacrylat (PMMA) als HPL, CPL, Melaminpapier oder als Furnier, oder eine Kombination hiervon, ausgebildet.

Ferner ist es bevorzugt, dass die Haftschicht des Beschichtungsmaterials Farbpigmente aufweist, um die Farbgebung der Haftschicht auf diejenige der Trägerschicht abzustimmen.

Ferner betrifft die vorliegende Erfindung ein Verfahren, im Zuge dessen insbesondere das zuvor beschriebene Beschichtungsmaterial eingesetzt wird. Das im Rahmen der vorliegenden Erfindung beschriebene Verfahren kann sowohl im Bereich der Stationärtechnik als auch im Bereich der Durchlauftechnik eingesetzt werden. Die zu bearbeitenden Werkstücke sind insbesondere plattenförmig, und weisen beispielsweise eine oder mehrere Kanten bzw. Ecken, und somit eine unstete Oberfläche, auf, wie diese bei einem Türfalz vorliegen.

Im Bereich der Stationärtechnik wird ein Werkstück beispielsweise mittels Saugspannern oder Klemmvorrichtungen gehalten und ein Beschichtungsaggregat wird mit einer Andruckrolle oder Andruckschuh relativ zum gehaltenen Werkstück bewegt. Im Falle eines Durchlaufverfahrens hingegen wird das Werkstück relativ zu einem Beschichtungsaggregat bewegt.

Im Rahmen der Erfindung ist oder wird der Schwächungsbereich ausgehend von der Haftschicht des Beschichtungsmaterials eingebracht. Somit können die Anforderungen an das Beschichtungsmaterial konkret auf die Gegebenheiten des Werkstücks und den Verlauf der Werkstückseiten abgestimmt werden.

In einer Ausführungsform des Verfahrens wird der zumindest eine Schwächungsbereich während des Zuführens des Beschichtungsmaterials und/oder während des Aufbringens des Beschichtungsmaterials am Werkstück eingebracht. Somit wird die Flexibilität des Verfahrens weiter erhöht und die Positioniergenauigkeit des Schwächungsbereichs verbessert.

Bevorzugt weist das Beschichtungsmaterial eine Trägerschicht und eine Haftschicht auf, wobei der Schwächungsbereich vor Aufbringen der Haftschicht an der Trägerschicht oder nach Aufbringen der Haftschicht an der Trägerschicht eingebracht wird.

Wird der Schwächungsbereich vor dem Aufbringen der aktivierbaren oder reaktivierbaren Haftschicht eingebracht, kann die im Nachgang aufzubringende Haftschicht speziell auf den bereits vorliegenden Schwächungsbereich abgestimmt aufgebracht werden. Der Verfahrensablauf kann dabei innerhalb einer Maschine durchgeführt werden.

Alternativ wird, wie zuvor erläutert, der Schwächungsbereich nach Aufbringen der Haftschicht an der Trägerschicht eingebracht. Somit wird ein bereits einsatzfähiges Beschichtungsmaterial vorrätig gehalten, beispielsweise in Form eines Wickels, und der Schwächungsbereich in dieses eingebracht. Dabei ist es bevorzugt, dass das Beschichtungsmaterial zugeführt wird, und beispielsweise in einer Beschichtungsmaschine zumindest ein Schwächungsbereich eingebracht. Auf diese Weise wird die Flexibilität weiter erhöht.

Ferner kann der Schwächungsbereich durch Trennen in das Beschichtungsmaterial eingebracht werden, bevorzugt spanend, insbesondere mittels eines Fräsers, einer Säge, eines Schabwerkzeugs, eines Schleifbands, und/oder durch Zerteilen, insbesondere mittels eines Messers oder einer oder mehrerer Nadeln, und/oder durch Abtragen, insbesondere durch thermisches Trennen, Ätzen oder elektrochemisches Abtragen. Hierdurch wird insbesondere die Dicke der Trägerschicht des Beschichtungsmaterials abschnittsweise reduziert und somit in diesem Bereich die Biegsamkeit des Beschichtungsmaterials erhöht.

Alternativ oder zusätzlich kann der Schwächungsbereich durch Umformen, insbesondere mittels einer Prägewalze oder eines Stempels, im Beschichtungsmaterial eingebracht werden. Somit wird insbesondere die Dicke der Trägerschicht des Beschichtungsmaterials abschnittsweise verringert und somit in diesem Bereich die Biegsamkeit des Beschichtungsmaterials erhöht. Ferner wird für den Fall, dass der Schwächungsbereich ausgehend von der Haftschicht des Beschichtungsmaterials eingebracht wird die Haftschicht weitestgehend erhalten.

Eine Profilierung am Werkstück (sogenannte Aufschlagunterkante) in Form einer kleinen Fase bzw. eines kleinen Radius, kann zusätzlich im Übergangsabschnitt verschiedener Werkstückseiten vorgesehen bzw. eingebracht werden. Diese Profilierung kann in Kombination mit dem Schwächungsbereich des Beschichtungsmaterials, sowie je nach gefordertem Endprofil, ggf. auch ohne Schwächung erfolgen.

### Kurze Beschreibung der Zeichnungen

- Fig. 1a, 1b: zeigen schematisch bekannte Beschichtungstechniken
- Fig. 2: zeigt schematisch ein Beschichtungsverfahren gemäß einer ersten Ausführungsform der vorliegenden Erfindung.
- Fig. 3: zeigt das mit dem in Fig. 2 dargestellten Verfahren beschichtete Werkstück.
- Fig. 4a-4d: zeigen Varianten verschiedener Beschichtungsmaterialien gemäß der vorliegenden Erfindung
- Fig. 5: zeigt eine Vorrichtung zur Durchführung des erfindungsgemäßen Beschichtungsverfahrens
- Fig. 6: zeigt eine alternative Vorrichtung zur Durchführung des erfindungsgemäßen Beschichtungsverfahrens

### Detaillierte Beschreibung der bevorzugten Ausführungsformen

Nachfolgend werden anhand der beigefügten Figuren bevorzugte Ausführungsformen der vorliegenden Erfindung im Detail beschrieben. Weitere in diesem Zusammenhang genannte Modifikationen bestimmter Merkmale können jeweils einzeln miteinander kombiniert werden, um neue Ausführungsformen auszubilden.

Im Rahmen der vorliegenden Erfindung kommen bevorzugt Beschichtungsmaterialien zum Einsatz, welche vorbeschichtet sind. Hierbei kann es sich um koextrudierte Beschichtungsmaterialien handeln, bei denen die Trägerschicht (Dekorschicht) zusammen mit der Haftschicht hergestellt wird. Ferner kann es sich um Beschichtungsmaterialien handeln, bei denen zunächst die Trägerschicht bspw. im Extrusionsverfahren hergestellt und diese Trägerschicht anschließend, ggf. örtlich und zeitlich getrennt von der Herstellung der Trägerschicht, mit einer aktivierbaren oder reaktivierbaren Haftschicht versehen wird.

Ferner ist es bevorzugt, dass die Haftschicht mit Farbpigmenten versehen, um die Farbgebung der Haftschicht an diejenige der Trägerschicht anzupassen. Somit ist die Haftschicht nach Aufbringung des Beschichtungsmaterials an einem Werkstück nicht oder nur kaum optisch wahrnehmbar, ohne die Dicke der Haftschicht zu verringern.

Derartige Beschichtungsmaterialien werden vor der Aufbringung an einem Werkstück mittels einer Energiequelle aktiviert, um die Haftschicht in einen Zustand zu versetzen, in dem diese eine adhäsive Wirkung entfaltet. Zur Aktivierung der Haftschicht kann insbesondere ein Laser, eine Heißluftquelle, eine Infrarotquelle, eine Ultraschallquelle, eine Magnetfeldquelle, eine Mikrowellenquelle, eine Plasmaquelle, LED-Quelle und/oder eine Begasungsquelle zum Einsatz kommen, wobei bei bestimmtem Beschichtungsmaterialien ggf. mehrere der genannten Energiequellen in Kombination miteinander verwendet werden können.

Der Laser ermöglicht dabei eine besonders schnelle Fokussierung auf einen bestimmten Bereich des Beschichtungsmaterials. Somit kann mit einem Laser Energie besonderes schnell bereitgestellt werden, wodurch hohe Arbeitsgeschwindigkeiten ermöglicht werden. Eine Heißluftquelle bspw. ist vergleichsweise kostengünstig verfügbar und erfordert einen relativ geringen Wartungsaufwand.

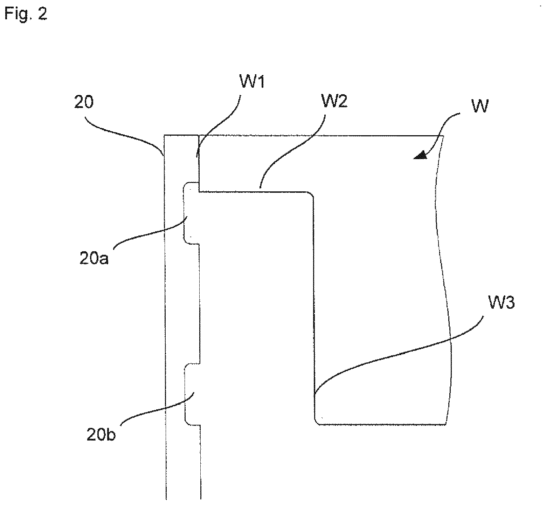

In Fig. 2 wird schematisch ein Verfahrensablauf zum Anbringen eines erfindungsgemäßen Beschichtungsmaterials 20 an einem Werkstück W gezeigt. Die in den Figuren dargestellten Elemente oder Bereiche hiervon sind zur Veranschaulichung teilweise mit größeren Dimensionen dargestellt, um die Zielrichtung der vorliegenden Erfindung deutlicher beschreiben zu können.

Insbesondere wird in Fig. 2 ein mit einer Haftschicht versehenes Beschichtungsmaterial 20 dargestellt, welches mit Schwächungsbereichen 20a, 20b an der Seite der Haftschicht versehen ist. Die Schwächungsbereiche 20a, 20b können nach Aufbringen der Haftschicht oder beim genannten Koextrusionsverfahren nach Herstellung des Beschichtungsmaterials eingebracht werden.

Hierbei besteht die Möglichkeit, dass der Hersteller des Beschichtungsmaterials Schwächungsbereiche 20a, 20b bspw. in gleichmäßigen Abständen am Beschichtungsmaterial 20 vorsieht, um somit in diesen Bereich gezielt eine Schwächung des Beschichtungsmaterials bereitzustellen. Auf diese Weise wird die Flexibilität des Beschichtungsmaterials 20 in diesen Bereichen erhöht.

Alternativ ist es möglich, das Beschichtungsmaterial 20 konkret auf das zu beschichtende Werkstück W, beispielsweise Türfalz, abzustimmen. Hierzu kann das Beschichtungsmaterial 20 an den entsprechenden Positionen mit Schwächungsbereichen 20a, 20b versehen werden. Dieser Schritt kann auch erfolgen, bevor das Beschichtungsmaterial zugeschnitten ist, die Positionen der Schwächungsbereiche aufgrund von Informationen über das zu beschichtende Werkstück W jedoch bereits bekannt sind. Auch ist es möglich, die Schwächungsbereiche 20a, 20b in ein bereits zugeschnittenes Beschichtungsmaterial einzubringen.

Ferner ist es möglich, den zumindest einen Schwächungsbereich vor Aufbringen der Haftschicht an einer Trägerschicht des Beschichtungsmaterials in dieses einzubringen. Alternativ ist es möglich, den zumindest einen Schwächungsbereich nach Aufbringen der Haftschicht in das Beschichtungsmaterial einzubringen, und zwar entweder ausgehend von der Seite der Trägerschicht (Sichtseite) oder ausgehend von der Seite der Haftschicht (Anbringungsseite/Haftseite).

Alternativ ist es möglich, das Beschichtungsmaterial an eine erste Werkstückseite W1 anzuheften, nachfolgend die Schwächungsbereiche 20a, 20b an den entsprechenden Positionen am Beschichtungsmaterial 20 einzubringen und nachfolgend das Beschichtungsmaterial 20 an den weiteren zu beschichtenden Werkstückseiten W2, W3, die im vorliegenden Beispiel winklig zur ersten Werkstückseite W1 ausgerichtet sind, anzubringen. Auf diese Weise kann die Flexibilität erhöht und gleichzeitig die Genauigkeit der Positionierung der Schwächungsbereiche 20a, 20b weiter verbessert werden.

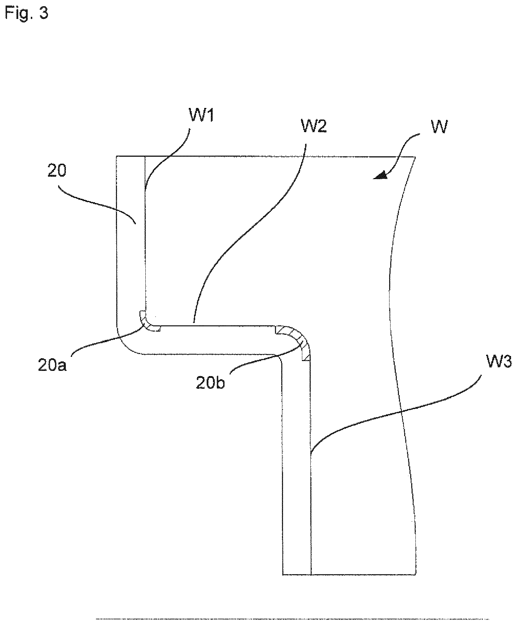

Wie aus Fig. 3 ersichtlich, kann somit in den Eck- und Kantenbereich, in denen die Werkstückseiten W1-W3 winklig ineinander übergehen, gezielt eine Schwächung des Beschichtungsmaterials eingebracht werden, damit dieses beim Beschichtungsvorgang um die Eck- und Kantenbereiche geführt werden kann.

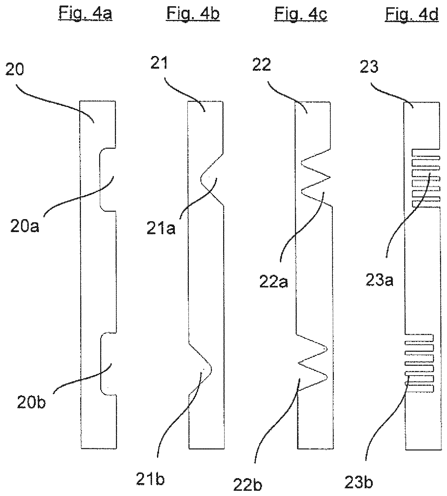

In Fig. 4a-4b sind Beispiele für Ausgestaltungen von Schwächungsbereichen 20a, 20b dargestellt, die im entsprechenden Beschichtungsmaterial vorgesehen oder eingebracht werden können.

Die in Fig. 4a gezeigte Variante entspricht im Wesentlichen derjenigen, die bereits in Fig. 2 dargestellt wurde. Dabei handelt es sich bei dem in Fig. 2 gezeigten Beschichtungsmaterial um eine in der Querschnittsansicht im Wesentlichen rechtwinklige Aussparung, die an den zur Trägerschicht weisenden Ecken Radien aufweist.

In Fig. 4b wird ein Beschichtungsmaterial 21 dargestellt, welches im Querschnitt dreiecksförmige Schwächungsbereiche 21a, 21b aufweist. Zusätzlich zeichnet sich das Beschichtungsmaterial 21 gemäß Fig. 4b dadurch aus, dass der erste Schwächungsbereich 21a an der mit der Haftschicht versehenen Seite des Beschichtungsmaterials 21 vorgesehen ist, während der zweite Schwächungsbereich 21b an der Seite der Trägerschicht des Beschichtungsmaterials 21 eingebracht ist. Auf diese Weise kann das Beschichtungsmaterial 21 noch besser an gegenläufige Eck- und Kantenbereiche angepasst werden, wie diese bspw. bei dem in Fig. 2 dargestellten Werkstück W vorliegen.

In Fig. 4c wird eine weitere Ausführungsform eines Beschichtungsmaterials 22 dargestellt. Das Beschichtungsmaterial 22 umfasst hierbei einen ersten Schwächungsbereich 22a, der im Querschnitt W-förmig ausgebildet ist (bzw. aus zwei benachbart zueinander angeordneten dreiecksförmigen Aussparungsabschnitten zusammengesetzt ist), sowie einen zweiten Schwächungsbereich 22b, die ebenfalls im Querschnitt W-förmig ausgebildet ist. Der erste Schwächungsbereich 22a befindet sich an der mit der Haftschicht versehenen Seite des Beschichtungsmaterials 22, wohingegen der zweite Schwächungsbereich 22b an der Seite der Trägerschicht des Beschichtungsmaterials 22 eingebracht ist.

In Fig. 4b wird eine vierte Variante eines Beschichtungsmaterials 23 dargestellt. Das Beschichtungsmaterial 23 umfasst einen ersten Schwächungsbereich 23a, der durch mehrere, benachbart zueinander angeordnete Schlitze ausgebildet ist, die ausgehend von der mit der Haftschicht versehenen Seite des Beschichtungsmaterials 23 eingebracht sind und sich in Richtung der Trägerschicht erstrecken. Ferner ist ein zweiter Schwächungsbereich 23b vorgesehen, der entsprechend dem ersten Aussparungsbereich durch mehrere Schlitze ausgebildet ist, jedoch an der Seite der Trägerschicht des Beschichtungsmaterials 23 eingebracht ist.

Es ist ersichtlich, dass die in den Fig. 4a-4d gezeigten Varianten verschiedene Ausgestaltungen der Schwächungsbereich an einem Beschichtungsmaterial kombiniert werden können. Auch ist es möglich, bspw. im ersten Schwächungsbereich 20a-23a, der in den gezeigten Ausführungsformen an der mit der Haftschicht versehenen Seite des Beschichtungsmaterials 20-23 vorgesehen ist, gleichzeitig eine Schwächung von der Seite der Trägerschicht des Beschichtungsmaterials 20-23 einzubringen, bzw. vorzusehen.

Die in den vorangegangenen Ausführungsformen gezeigten Schwächungsbereiche können gemäß einer ersten Variante spanend in das Beschichtungsmaterial 20-23 eingebracht werden. Hierzu kann bspw. ein Fräser oder ein Sägewerkzeug verwendet werden. Alternativ ist es möglich, die Schwächungsbereiche durch Aufbringung von Druck oder mittels eines Prägewerkzeugs in das Beschichtungsmaterial einzudrücken, sodass bspw. die Trägerschicht des Beschichtungsmaterials im Schwächungsbereich komprimiert wird.

Das Einprägen der Schwächungsbereiche kann bei koextrudierten Beschichtungsmaterialien während deren Herstellung im Zuge der Extrusion erfolgen.

Alternativ ist es möglich, die Schwächungsbereiche in ein bereits ausgeformtes Beschichtungsmaterial einzubringen. Das Beschichtungsmaterial bzw. die Trägerschicht des Beschichtungsmaterials kann dabei in einem teilweise oder vollständig ausgehärteten Zustand vorliegen.

Wenn das Beschichtungsmaterial bzw. die Trägerschicht bei Einprägung der Schwächungsbereiche im Teilweise ausgehärteten Zustand vorliegt, kann der Prägevorgang mit geringer Kraftaufbringung durchgeführt werden.

Falls der Prägevorgang durchgeführt wird, wenn das Beschichtungsmaterial bzw. die Trägerschicht bereits vollständig ausgehärtet sind, kann die Flexibilität erhöht werden, da das Beschichtungsmaterial bspw. zwischengelagert, insbesondere aufgerollt, werden kann.

Eine weitere Möglichkeit besteht darin, den Schwächungsbereich durch eine Porosierung, bevorzugt eine Mikroporosierung, einzubringen, die bspw. durch Behandlung mit einer mit der Trägerschicht reagierenden Substanz erreicht wird.

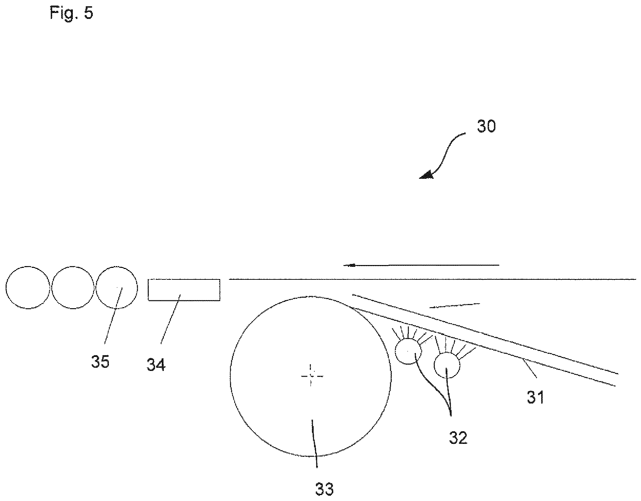

In Figur 5 wird eine Vorrichtung 30 zur Durchführung des erfindungsgemäßen Beschichtungsverfahrens gezeigt. Die Vorrichtung 30 umfasst eine Zuführeinrichtung 31, durch die ein an einem Werkstück aufzubringendes Beschichtungsmaterial geleitet wird. In einem nahe zu einer Andruckrolle 33 gelegenen Bereich der Vorrichtung 30 sind im vorliegenden Beispiel zwei Energiequellen 32 vorgesehen, wobei in einer Modifikation der gezeigten Vorrichtung auch eine Energiequelle 32 oder mehrere Energiequellen 32 bereitgestellt werden können. Die zumindest eine Energiequelle 32 ist ausgewählt aus einem Laser, einer Heißluftquelle, einer Infrarotquelle, einer Ultraschallquelle, einer Magnetfeldquelle, einer Mikrowellenquelle, einer Plasmaquelle, LED-Quelle und/oder einer Begasungsquelle.

In Durchlaufrichtung des Beschichtungsmaterials nachrangig umfasst die Vorrichtung 30 ferner eine Verformstrecke 34, in der ein weiterer Verformschritt nach Aufbringung des Beschichtungsmaterials an einem Werkstück durchgeführt wird, sowie zumindest eine Anpressrolle 35, mit der während der Aushärtung der Haftmittelschicht des an einem Werkstück angehefteten Beschichtungsmaterials weiterhin ein Anpressdruck aufgebracht wird.

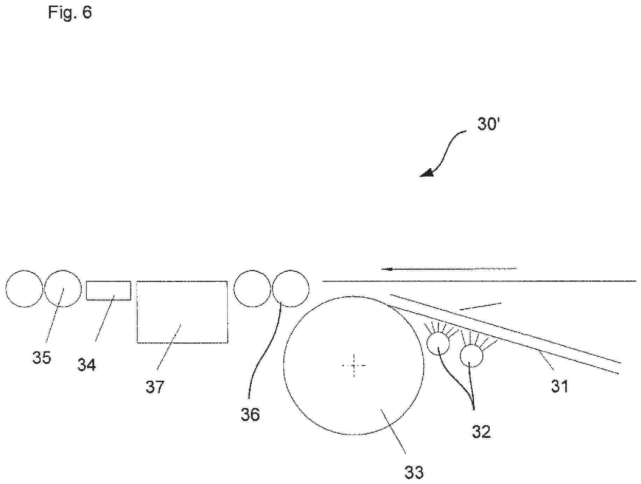

In Figur 6 wird eine alternative Vorrichtung 30' zur Durchführung des erfindungsgemäßen Beschichtungsverfahrens gezeigt. Die in Figur 6 gezeigte Vorrichtung unterscheidet sich dahingehend von der unter Bezugnahme auf Figur beschriebenen Vorrichtung 30, dass die Vorrichtung 30' weitere Anpressrollen 36, die benachbart zur Andruckrolle 33 angeordnet sind, sowie eine Nachbearbeitungsstation 37 aufweist, die zwischen den weiteren Anpressrollen 36 und der Verformstrecke 34 angeordnet ist.

## Patentansprüche

1. Beschichtungsmaterial (20-23), insbesondere Schmalflächenbeschichtungsmaterial, zur Beschichtung einer unsteten Oberfläche eines Werkstücks (W),
welches Beschichtungsmaterial eine Trägerschicht sowie eine aktivierbare oder reaktivierbare Haftschicht aufweist,
wobei das Beschichtungsmaterial (20-23) ferner zumindest einen Schwächungsbereich (20a, 20b; 21a, 21b; 22a, 22b; 23a, 23b) umfasst, und
der Schwächungsbereich ausgehend von der Haftschicht in das Beschichtungsmaterial eingebracht ist.

2. Beschichtungsmaterial (20-23) gemäß Anspruch 1, **dadurch gekennzeichnet, dass** das Beschichtungsmaterial ein koextrudiertes Beschichtungsmaterial ist, wobei insbesondere die Trägerschicht und die Haftschicht koextrudiert sind, oder die Trägerschicht des Beschichtungsmaterial nach deren Herstellung mit einer Haftschicht versehen ist.

3. Beschichtungsmaterial (20-23) gemäß einem der vorangegangenen Ansprüche, **dadurch gekennzeichnet, dass** der Schwächungsbereich eine Aussparung ist, die im Querschnitt des Beschichtungsmaterials (20-23) betrachtet insbesondere v-förmig, w-förmig, rechtwinklig oder halbkreisförmig ausgeformt ist, und/oder der Schwächungsbereich durch eine Vielzahl von Schlitzen oder Sacklöchern im Beschichtungsmaterial (20-23) ausgebildet ist.

4. Beschichtungsmaterial (20-23) gemäß einem der vorangegangenen Ansprüche, **dadurch gekennzeichnet, dass** der Schwächungsbereich als poröser Bereich der Trägerschicht des Beschichtungsmaterials (20-23) ausgebildet ist.

5. Beschichtungsmaterial (20-23) gemäß einem der vorangegangenen Ansprüche, **dadurch gekennzeichnet, dass** die Trägerschicht des Beschichtungsmaterials zumindest abschnittsweise aus PVC, Polystyrol, insbesondere aus ABS, aus PP, PE, Polycarbonat und/oder Polymethylmetacrylat (PMMA), als HPL, CPL, Melaminpapier und/oder als Furnier ausgebildet ist.

6. Beschichtungsmaterial (20-23) gemäß einem der vorangegangenen Ansprüche, **dadurch gekennzeichnet, dass** das Beschichtungsmaterial (20-23) eine Dicke zwischen 0,5mm - 4 mm, bevorzugt 0,7-4mm, weiter bevorzugt 1,5mm-4mm, aufweist, wobei die Haftschicht insbesondere eine Dicke von 0,1 - 0,3mm aufweist.

7. Beschichtungsmaterial (20-23) gemäß einem der vorangegangenen Ansprüche, **dadurch gekennzeichnet, dass** die Haftschicht des Beschichtungsmaterials (20-23) Farbpigmente aufweist.

8. Verfahren zur Beschichtung unsteter Oberflächen eines Werkstücks, insbesondere eines Werkstücks aus Holz oder Holzwerkstoffen, wobei das Verfahren folgende Schritte umfasst:
Zuführen eines Beschichtungsmaterials (20-23), wobei das Beschichtungsmaterial (20-23) Schwächungsbereiche (20a, 20b; 21a, 21b; 22a, 22b; 23a, 23b) umfasst,
Herbeiführen einer Relativbewegung zwischen dem Beschichtungsmaterial (20-23) und einem Werkstück (W), Aufbringen des Beschichtungsmaterial (20-23) an Werkstückseiten (W1-W3), welche Werkstückseiten (W1-W3) winklig zueinander angeordnet sind, wobei der zumindest eine Schwächungsbereich (20a, 20b; 21a, 21b; 22a, 22b; 23a, 23b) im Übergangsabschnitt der Werkstückseiten (W1-W3), insbesondere im Bereich einer Ecke oder Kante, positioniert wird,
wobei der Schwächungsbereich (20a, 20b; 21a, 21b; 22a, 22b; 23a, 23b) ausgehend von einer aktivierbaren oder reaktivierbaren Haftschicht des Beschichtungsmaterials in das Beschichtungsmaterial (20-23) eingebracht ist oder wird.

9. Verfahren gemäß Anspruch 8, bei dem der zumindest eine Schwächungsbereich (20a, 20b; 21a, 21b; 22a, 22b; 23a, 23b) während des Zuführens des Beschichtungsmaterials (20-23) und/oder während des Aufbringens des Beschichtungsmaterials (20-23) am Werkstück (W) eingebracht wird.

10. Verfahren gemäß einem der Ansprüche 8-9, bei dem das Beschichtungsmaterial eine Trägerschicht und eine Haftschicht aufweist, wobei der zumindest eine Schwächungsbereich vor Aufbringen der Haftschicht an der Trägerschicht oder nach Aufbringen der Haftschicht an der Trägerschicht eingebracht wird.

11. Verfahren gemäß einem der Ansprüche 8-10, bei dem der Schwächungsbereich (20a, 20b; 21a, 21b; 22a, 22b; 23a, 23b) durch Trennen in das Beschichtungsmaterial (20-23) eingebracht wird, bevorzugt spanend, insbesondere mittels eines Fräsers, einer Säge, eines Schabwerkzeugs, eines Schleifbands, und/oder durch Zerteilen, insbesondere mittels eines Messers oder einer oder mehrerer Nadeln, und/oder durch Abtragen, insbesondere durch thermisches Trennen, Ätzen oder elektrochemisches Abtragen.

12. Verfahren gemäß einem der Ansprüche 8-11, bei dem der Schwächungsbereich (20a, 20b; 21a, 21b; 22a, 22b; 23a, 23b) durch Umformen, insbesondere mittels einer Prägewalze, einer Druckwalze, eines Druckschuh oder eines Stempels, im Beschichtungsmaterial eingebracht wird.

13. Verfahren gemäß einem der Ansprüche 8-12, bei dem ein Aktivieren der Haftschicht des Beschichtungsmaterials während der Relativbewegung zwischen Beschichtungsmaterial und Werkstück durchgeführt wird, wobei die Aktivierung durch eine Energiequelle durchgeführt wird, die insbesondere ausgewählt ist aus Laser, Heißluftquelle, Infrarotquelle, Ultraschallquelle, Magnetfeldquelle, Mikrowellenquelle, Plasmaquelle, LED-Quelle und/oder Begasungsquelle.

## Claims

1. Coating material (20-23), in particular narrow-surface coating material, for coating an uneven surface of a workpiece (W),
which coating material has a backing layer and an activatable or reactivatable bonding layer,
wherein the coating material (20-23) further comprises a weakened region (20a, 20b; 21a, 21b; 22a, 22b; 23a, 23b), and
the weakened region having been introduced into the coating material proceeding from the bonding layer.

2. Coating material (20-23) according to claim 1, **characterised in that** the coating material is a coextruded coating material, wherein the backing layer and the bonding layer in particular are coextruded, or the backing layer of the coating material is provided with a bonding layer after said backing layer has been manufactured.

3. Coating material (20-23) according to any of the preceding claims, **characterised in that** the weakened region is a recess which, viewed in the cross-section of the coating material (20-23), is in particular v-shaped, w-shaped, rectangular or semi-circular, and/or the weakened region is formed by a plurality of slits or blind holes in the coating material (20-23).

4. Coating material (20-23) according to any of the preceding claims, **characterised in that** the weakened region is designed as a porous region of the backing layer of the coating material (20-23).

5. Coating material (20-23) according to any of the preceding claims, **characterised in that** the backing layer of the coating material consists at least in portions of PVC, polystyrene, in particular of ABS, of PP, PE, polycarbonate and/or polymethyl metacrylate (PMMA), as HPL, CPL, melamine paper and/or as veneer.

6. Coating material (20-23) according to any of the preceding claims, **characterised in that** the coating material (20-23) has a thickness of between 0.5 mm - 4 mm, preferably 0.7 mm - 4 mm, more preferably 1.5 mm - 4 mm, the bonding layer in particular having a thickness of 0.1 mm - 0.3 mm.

7. Coating material (20-23) according to any of the preceding claims, **characterised in that** the bonding layer of the coating material (20-23) comprises colour pigments.

8. Method for coating uneven surfaces of a workpiece, in particular a workpiece made of wood or wood-based materials, wherein the method comprises the following steps:
supplying a coating material (20-23), wherein the coating material (20-23) comprises weakened regions (20a, 20b; 21a, 21b; 22a, 22b; 23a, 23b),
bringing about a relative movement between the coating material (20-23) and a workpiece (W),
applying the coating material (20-23) to workpiece faces (W1-W3), which workpiece faces (W1-W3) are arranged at an angle to one another, wherein the at least one weakened region (20a, 20b; 21a, 21b; 22a, 22b; 23a, 23b) is positioned in the transition portion of the workpiece faces (W1-W3), in particular in the region of a corner or edge,
wherein the weakened region (20a, 20b; 21a, 21b; 22a, 22b; 23a, 23b) has been or is introduced into the coating material (20-23) proceeding from an activatable or reactivatable bonding layer of the coating material.

9. Method according to claim 8, wherein the at least one weakened region (20a, 20b; 21a, 21b; 22a, 22b; 23a, 23b) is introduced into the workpiece (W) during supply of the coating material (20-23) and/or during application of the coating material (20-23).

10. Method according to any of claims 8-9, wherein the coating material comprises a backing layer and a bonding layer, wherein the at least one weakened region is introduced prior to application of the bonding layer onto the backing layer or after application of the bonding layer onto the backing layer.

11. Method according to any of claims 8-10, wherein the weakened region (20a, 20b; 21a, 21b; 22a, 22b; 23a, 23b) is introduced into the coating material (20-23) by means of material separation, preferably machining, in particular using a mill, a saw, a scraping tool, an abrasive belt, and/or by means of cutting, in particular using a knife or one or more needles, and/or by means of non-traditional material removal, in particular by means of thermal cutting, etching or electrochemical machining.

12. Method according to any of claims 8-11, wherein the weakened region (20a, 20b; 21a, 21b; 22a, 22b; 23a, 23b) is introduced into the coating material by means of forming, in particular using an embossing roller, a pressure roller, a pressure shoe or a die.

13. Method according to any of claims 8-12, wherein the bonding layer of the coating material is activated during the relative movement between the coating material and the workpiece, wherein the activation is carried out by means of an energy source that is in particular selected from a laser, hot air source, infrared source, ultrasound source, magnetic field source, microwave source, plasma source, LED source and/or gassing source.

## Revendications

1. Matériau de revêtement (20-23), en particulier un matériau de revêtement à surface étroite, pour revêtir une surface changeante d'une pièce à usiner (W),
lequel matériau de revêtement présente une couche de support et une couche adhésive activable ou réactivable,
dans lequel le matériau de revêtement (20-23) comprend en outre au moins une zone d'affaiblissement (20a, 20b ; 21a, 21b ; 22a, 22b ; 23a, 23b), et
la zone d'affaiblissement est introduite dans le matériau de revêtement à partir de la couche adhésive.

2. Matériau de revêtement (20-23) selon la revendication 1, **caractérisé en ce que** le matériau de revêtement est un matériau de revêtement coextrudé, dans lequel en particulier la couche de support et la couche adhésive sont coextrudées, ou la couche de support du matériau de revêtement est pourvue d'une couche adhésive après sa production.

3. Matériau de revêtement (20-23) selon l'une quelconque des revendications précédentes, **caractérisé en ce que** la zone d'affaiblissement est un évidement qui est formé dans la section transversale du matériau de revêtement (20-23) considérée en particulier en forme de V, en forme W, de forme rectangulaire ou semi-circulaire, et/ou la zone d'affaiblissement est formée par une pluralité de fentes ou de trous borgnes dans le matériau de revêtement (20-23).

4. Matériau de revêtement (20-23) selon l'une quelconque des revendications précédentes, **caractérisé en ce que** la zone d'affaiblissement est formée sous la forme d'une zone poreuse de la couche de support du matériau de revêtement (20-23).

5. Matériau de revêtement (20-23) selon l'une quelconque des revendications précédentes, **caractérisé en ce que** la couche de support du matériau de revêtement est formée au moins par endroits de PVC, de polystyrène, en particulier ABS, PP, PE, de polycarbonate, et/ou de polyméthylméthacrylate (PMMA), sous forme de HPL, CPL, papier mélaminé et/ou placage.

6. Matériau de revêtement (20-23) selon l'une quelconque des revendications précédentes, **caractérisé en ce que** le matériau de revêtement (20-23) présente une épaisseur comprise entre 0,5 mm et 4 mm, de préférence 0,7 et 4 mm, de manière plus préférée 1,5 mm et 4 mm, dans lequel la couche adhésive présente en particulier une épaisseur comprise entre 0,1 et 0,3 mm.

7. Matériau de revêtement (20-23) selon l'une quelconque des revendications précédentes, **caractérisé en ce que** la couche adhésive du matériau de revêtement (20-23) présente des pigments colorés.

8. Procédé pour revêtir des surfaces changeantes d'une pièce à usiner, en particulier une pièce à usiner en bois ou matériaux à base de bois, dans lequel le procédé comprend les étapes suivantes consistant à :
fournir un matériau de revêtement (20-23), dans lequel matériau de revêtement (20-23) comprend des zones d'affaiblissement (20a, 20b; 21a, 21b; 22a, 22b; 23a, 23b),
induire un mouvement relatif entre le matériau de revêtement (20-23) et une pièce à usiner (W),
appliquer le matériau de revêtement (20-23) sur des côtés de pièce à usiner (W1-W3), lesquels côtés de pièce à usiner (W1-W3) sont agencés de manière angulaire l'un par rapport à l'autre, dans lequel la au moins une zone d'affaiblissement (20a, 20b ; 21a, 21b ; 22a, 22b ; 23a, 23b) est positionnée dans une section de transition des côtés de pièce à usiner (W1-W3), en particulier dans la zone d'un coin ou d'un bord,
dans lequel la zone d'affaiblissement (20a, 20b ; 21a, 21b ; 22a, 22b ; 23a, 23b) est ou va être introduite dans le matériau de revêtement (20-23) à partir d'une couche adhésive activable ou réactivable du matériau de revêtement.

9. Procédé selon la revendication 8, dans lequel la au moins une zone d'affaiblissement (20a, 20b ; 21a, 21b ; 22a, 22b ; 23a, 23b) est introduite pendant la fourniture du matériau de revêtement (20-23) et/ou pendant l'application du matériau de revêtement (20-23) sur la pièce à usiner (W).

10. Procédé selon l'une quelconque des revendications 8 à 9, dans lequel le matériau de revêtement présente une couche support et une couche adhésive, dans lequel la au moins une zone d'affaiblissement est introduite avant application de la couche adhésive sur la couche de support ou après l'application de la couche adhésive sur la couche de support.

11. Procédé selon l'une quelconque des revendications 8 à 10, dans lequel la zone d'affaiblissement (20a, 20b ; 21a, 21b ; 22a, 22b ; 23a, 23b) est introduite dans le matériau de revêtement (20-23) par séparation, de préférence par usinage, en particulier au moyen d'une fraise, d'une scie, d'un outil de grattage, d'une bande abrasive, et/ou par découpe, en particulier au moyen d'un couteau ou d'une ou plusieurs aiguilles, et/ou par enlèvement, en particulier par séparation thermique, gravure ou élimination électrochimique.

12. Procédé selon l'une quelconque des revendications 8 à 11, dans lequel la zone d'affaiblissement (20a, 20b ; 21a, 21b ; 22a, 22b ; 23a, 23b) est introduite dans le matériau de revêtement par formage, en particulier au moyen d'un rouleau d'estampage, d'un rouleau presseur, d'un patin de pression ou d'un poinçon.

13. Procédé selon l'une quelconque des revendications 8 à 12, dans lequel l'activation de la couche adhésive du matériau de revêtement est exécutée pendant le mouvement relatif entre le matériau de revêtement et la pièce à usiner, dans lequel l'activation est exécutée par l'intermédiaire d'une source d'énergie, qui est particulièrement choisie parmi un laser, une source d'air chaud, une source d'infrarouge, une source d'ultrasons, une source de champ magnétique, une source de micro-ondes, une source de plasma, une source à DEL et/ou une source de fumigation.
